Europäisches Patentamt

European Patent Office

Office européen des brevets

(11) Publication number: **0 535 642 B1**

(12) **EUROPEAN PATENT SPECIFICATION**

(45) Date of publication of patent specification: **29.11.95**

(51) Int. Cl.⁶: **C09K 21/00**, C08K 9/04, C08K 5/09

(21) Application number: **92116754.0**

(22) Date of filing: **30.09.92**

(54) **Flame retardants and process for producing same.**

(30) Priority: **04.10.91 JP 257846/91**

(43) Date of publication of application:
**07.04.93 Bulletin 93/14**

(45) Publication of the grant of the patent:
**29.11.95 Bulletin 95/48**

(84) Designated Contracting States:
**BE DE FR GB NL**

(56) References cited:
**EP-A- 0 052 868**
**EP-A- 0 355 808**
**US-A- 4 888 136**

(73) Proprietor: **MARUBISHI OIL CHEMICAL CO., LTD.**
**7-12, Tomobuchi-cho 3-chome**
**Miyakojima-ku**
**Osaka-shi**
**Osaka (JP)**

(72) Inventor: **Higashitsuji, Ken**
**232, Muromachidori Sawaragi-cho-agaru,**
**Buejin-cho**
**Kamigyo-ku,**
**Kyoto-shi,**
**Kyoto (JP)**
Inventor: **Takahashi, Yasunobu**
**48-2, Kashiyama**
**Habikino-shi,**
**Osaka (JP)**
Inventor: **Kojima, Takayoshi**
**1-5, Nankadai 4-chome**
**Kawachinagano-shi,**
**Osaka (JP)**
Inventor: **Nadehara, Yutaka**
**3-33, Yamashiro-cho 1-chome**
**Yao-shi,**
**Osaka (JP)**
Inventor: **Onoki, Toshihiko**
**4-10, Kema-cho 5-chome,**
**Miyakojima-ku**
**Osaka-shi,**
**Osaka (JP)**

(74) Representative: **Hoeger, Stellrecht & Partner**
**Uhlandstrasse 14 c**
**D-70182 Stuttgart (DE)**

EP 0 535 642 B1

**Description**

BACKGROUND OF THE INVENTION

1. Field of the Invention

The present invention relates to a flame retardant and a process for producing the same. In particular, the present invention is concerned with a flame retardant comprising ammonium sulfate as an effective component and a process for producing the same.

2. Description of the Prior Art

It is known that ammonium sulfate is useful as a flame retardant for a flammable polymer. Ammonium sulfate, however, has drawbacks such as strong self-agglomeration (caking or integrity), difficulty in conducting pulverization and the occurrence of agglomeration during storage even where it is pulverized. Further, when it is kneaded or added to a synthetic resin, such as a thermoplastic resin or a thermosetting resin, agglomeration occurs due to the shearing caused at the time of mixing. Further, since ammonium sulfate is easily soluble in water, a molded article of a resin containing ammonium sulfate has a water resistance problem. Specifically, when the resin composition or an article produced by molding the resin composition is brought into contact with an aqueous substance, ammonium sulfate is eluted, which causes the properties of this composition or the state of the molded article to change, so that useability becomes poor. Further, when this composition is used under highly humid conditions, ammonium sulfate is dissolved and oozed out by moisture contained therein in the case of the occurrence of moisture in the air, etc., so that practical problems, such as the deposition of an ammonium sulfate crystal on the surface of the resin occur. For this reason, although ammonium sulfate is useful as a flame retardant, the use of ammonium sulfate in synthetic resins such as thermoplastic resins or thermosetting resins is very limited.

Japanese Unexamined Patent Publication (Kokai) No. 63-202639 describes the use of magnesium steatite as a pulverization assistant at the time of the pulverization of ammonium sulfate. This method, however, has problems such as the generation of an ammonia gas during pulverization and coloring of the resin during kneading. Further, Japanese Unexamined Patent Publication (Kokai) No. 60-26046 discloses that dispersion and fluidity can be improved by using a method of improving the self-agglomeration of ammonium sulfate that comprises treating the surface of ammonium sulfate with sodium stearate and sodium laurylsulfonate. These treatments evolve an ammonia gas during pulverization, and the heat resistance of the resin is lowered during kneading, which causes the resin to be colored and, in extreme cases, the properties of the resin are lowered. Further, Japanese Unexamined Patent Publication (Kokai) No. 59-191746 and Japanese Unexamined Patent Publication (Kokai) No. 60-6740 propose a treatment of ammonium sulfate with polysiloxane for the purpose of improving water resistance. According to this method, although an improvement in water resistance can be attained, the process is troublesome.

SUMMARY OF THE INVENTION

In view of the above-described problems of the prior art, the present inventors have made extensive and intensive studies with a view to attaining the pulverization of ammonium sulfate and, at the same time, an alleviation of self-agglomeration, an improvement in water resistance and the prevention of coloration of the resin during kneading, which has led to the completion of the present invention.

Accordingly, an object of the present invention is to provide a flame retardant comprising ammonium sulfate as an effective component, which is in a pulverised form and has a low level of self-agglomeration, high water resistance and a less liability to coloration of the resin during kneading, and to provide a process for producing the same.

In order to attain the above-described object, the present invention provides a finely divided flame retardant comprising a finely divided powder comprised of ammonium sulfate and 0.1 to 10.0 % by weight, based on the weight of ammonium sulfate, of at least one fatty acid salt of aluminum.

This flame retardant is produced by a process according to the present invention, comprising pulverizing ammonium sulfate in the presence of 0.1 to 10.0 % by weight, based on the weight of ammonium sulfate, of at least one fatty acid salt of aluminum.

2

DESCRIPTION OF THE PREFERRED EMBODIMENTS

The fatty acid salt of aluminum used in the present invention is preferably an aluminum salt of a saturated or unsaturated fatty acid having 6 to 22 carbon atoms in the fatty acid group. Preferred examples of the fatty acid salt include a monofatty acid aluminum salt, a difatty acid aluminum salt and a trifatty acid aluminum salt.

Specific examples of the fatty acid aluminum salt useful for the present invention include aluminum monocaproate, aluminum dicaproate, aluminum tricaproate, aluminum monocaprylate, aluminum dicaprylate, aluminum tricaprylate, aluminum monocaprate, aluminum dicaprate, aluminum tricaprate, aluminum monolaurate, aluminum dilaurate, aluminum trilaurate, aluminum monomyristate, aluminum dimyristate, aluminum trimyristate, aluminum monopalmitate, aluminum dipalmitate, aluminum tripalmitate, aluminum monostearate, aluminum distearate, aluminum tristearate, aluminum monooleate, aluminum dioleate, aluminum trioleate, aluminum monoarachidate, aluminum diarachidate, aluminum triarachidate, aluminum monobehenate, aluminum dibehenate and aluminum tribehenate.

The amount of the fatty acid aluminum salt is 0.1 to 10.0 % by weight, preferably 0.3 to 5.0 % by weight, more preferably 0.5 to 3.0 % by weight, based on the weight of ammonium sulfate. When this amount is less than 0.1 % by weight, prevention of self-agglomeration of pulverized ammonium sulfate and prevention of the coloration of a molded article containing ammonium sulfate added thereto are unsatisfactory. On the other hand, the use of a fatty acid aluminum salt in an amount exceeding 10 % by weight has an adverse effect on pulverization and flame retardancy.

Examples of the means for pulverization include a method wherein use is made of a pulverizer. In this method, ammonium sulfate is pulverized by means of a pulverizer in the presence of at least one fatty acid aluminum salt, so that ammonium sulfate becomes a finely divided powder comprising a particle preferably having a maximum diameter of 75 $\mu$m or less and, at the same time, the surface of the ammonium sulfate particle is treated with the fatty acid aluminum salt.

Although a conventional wet or dry type pulverizer can be used for the pulverization, it is preferable to use a pulverizer having a grinding effect, and there is no particular limitation on the solvent used in the case of wet pulverization as long as the solvent, other than water, is inert. However, alcohols such as methanol and ethanol, hydrocarbons such as n-heptane and aromatic solvents such as benzene, toluene and xylene are preferable from the viewpoint of easy handleability and drying ease. Although the amount of use of the solvent may vary depending upon the specific gravity of the solvent and the type of pulverizer, it is preferably 1 to 10 times by weight, and preferably 1.5 to 5 times by weight that of ammonium sulfate. After pulverization, the solid matter is preferably collected by filtration or centrifuging according to a conventional method and dried under reduced pressure. There is no particular limitation on the particle diameter of ammonium sulfate used in the pulverization.

The flame retardant according to the present invention can be advantageously used for any of the thermoplastic resins and thermosetting resins. Specific examples of such resins include thermoplastic resins, for example, polyolefin resins such as polypropylene and polyethylene, polyvinyl resins such as polystyrene, polymethyl methacrylate, polyvinyl acetate and polyvinyl alcohol, ethylene-vinyl acetate copolymer, polyamide resins such as nylon, polyester resins such as polyethylene terephthalate and polycarbonate, polyacrylonitrile resins such as ABS resin and AS resin and polyether resins, mixtures and copolymers of the above-described resins and various resins produced by modifying the above-described resins, elastic polymers such as SBR, NBR, polybutadiene and polyisoprene and thermosetting resins such as phenolic resin, unsaturated polyester resin, polyurethane resin and epoxy resin.

During the pulverization, it is possible to additionally use pulverization assistants commonly used in the art, for example, titanium oxide and fatty acids.

The flame retardant according to the present invention does not give rise to agglomeration during storage, and can be homogeneously dispersed in the resin to provide a molded article having excellent water resistance and flame retardancy when it is incorporated and kneaded with the resin, and does not color the resin during kneading.

The present invention will now be further illustrated with reference to the following Examples and Comparative Examples.

In the following Examples and Comparative Examples, various tests were conducted by the following methods.

### Measurement of Particle Diameter

The maximum particle diameter and the mean particle diameter were measured by means of a centrifugal automatic particle size distribution measuring apparatus (model CAPA-700 manufactured by Horiba, Ltd.).

### Evaluation of Self-Cohesion of Flame Retardant

One liter of the flame retardant was placed in a container having a bottom area of 200 $cm^2$ (10 cm x 20 cm), and the surface of the flame retardant was leveled. A load of 200 $g/cm^2$ was applied on the flame retardant, and the number of days taken for the flame retardant to agglomerate was observed.

### Evaluation in Resin Molded Article

### Dispersion of Flame Retardant

The molded article was subjected to through-view ( thickness: 1/16 in.), and the dispersion was judged based on whether or not a coarse agglomerate is present.

### Coloration of Molded Article

The coloration of the molded article was evaluated with the naked eye immediately after molding.

### Flame Retardancy

Flame retardancy was measured according to UL-94 (thickness of test piece: 1/16 in. for PP and 1/8 in. for other resins) and JIS K 7201 (LOI).

### Water Resistance

Water absorption was measured according to ASTM-D-570.

A test piece having a length of 2.5 in., a width of 0.5 in. and a thickness of 1/8 in. was dried in an oven of 50°C for 24 hr, allowed to cool in a desiccator of 23°C for 3 hr and then weighed (A). The test piece was immersed in pure water of 23°C for 168 hr, water droplets on the test piece were wiped off with a dry cloth, and the test piece was then immediately weighed (B). This test was conducted on three test pieces, and water absorption was determined by the following equation:

$$\textbf{Water absorption (\%)} = \frac{\textbf{(B) } - \textbf{ (A)}}{\textbf{(A)}} \textbf{ x 100}$$

### Example 1

480 g of ammonium sulfate and 20 g of aluminum monocaproate were previously mixed with each other, and the mixture was pulverized by means of a pulverizer (SUPER MASSCOLLOIDER manufactured by Masuko Sangyo K.K.) with a clearance of 50 $\mu$m and at 500 rpm. The resultant flame retardant powder had a maximum particle diameter of 50 $\mu$m and a mean particle diameter of 19 $\mu$m and was free from caking. This flame retardant was mixed with a resin in an amount ratio specified in Tables 2 to 6; the mixture was subjected to melt mixing by means of a kneader (manufactured by Irie Shokai Co., Ltd.), and a test piece was molded from the mixture by means of a press molding machine of 200°C (manufactured by Shinto Kinzoku K.K.).

The test results obtained on the flame retardants and molded articles are summarized in the following Tables 1 to 6.

Example 2

499.5 g of ammonium sulfate and 0.5 g of aluminum dicaproate were previously mixed with each other, and a flame retardant powder was prepared therefrom in the same manner as that of Example 1. The resultant flame retardant powder had a maximum particle diameter of 44 $\mu$m and a mean particle diameter of 15 $\mu$m and was free from caking. This flame retardant was used according to the formulation specified in Table 2, and a test piece was molded therefrom in the same manner as that of Example 1. The results are given in Tables 1 and 2.

Example 3

450 g of ammonium sulfate and 50 g of aluminum trimyristate were previously mixed with each other, and a flame retardant powder was prepared therefrom in the same manner as that of Example 1. The resultant flame retardant powder had a maximum particle diameter of 46 $\mu$m and a mean particle diameter of 16 $\mu$m and was free from caking. This flame retardant was used according to the formulation specified in Table 2, and a test piece was molded therefrom in the same manner as that of Example 1. The results are given in Tables 1 and 2.

Example 4

490 g of ammonium sulfate and 10 g of aluminum tristearate were previously mixed with each other, and a flame retardant powder was prepared therefrom in the same manner as that of Example 1. The resultant flame retardant powder had a maximum particle diameter of 40 $\mu$m and a mean particle diameter of 12 $\mu$m and was free from caking. This flame retardant was used according to the formulations specified in Tables 2 to 6, and test pieces were molded therefrom in the same manner as that of Example 1. The results are given in Tables 1 to 6.

Example 5

460 g of ammonium sulfate and 40 g of aluminum monobehenate were previously mixed with each other, and a flame retardant powder was prepared therefrom in the same manner as that of Example 1. The resultant flame retardant powder had a maximum particle diameter of 48 $\mu$m and a mean particle diameter of 16 $\mu$m and was free from caking. This flame retardant was used according to the formulations specified in Tables 2 to 6, and test pieces were molded therefrom in the same manner as that of Example 1. The results are given in Tables 1 to 6.

Example 6

495 g of ammonium sulfate and 5 g of aluminum tristearate were placed in a porcelain ball mill (capacity: 3 liters, ball: 1.5 liters), and pulverization was conducted at 60 r.p.m. for 4 hr. The resultant flame retardant powder was passed through a 200-mesh standard sieve (JIS) to remove coarse particles having a size of 75 $\mu$m or more (1.0 % or less). The mean particle diameter was 15 $\mu$m, and no caking was observed. This flame retardant was used according to the formulations specified in Tables 2 to 6, and test pieces were molded therefrom in the same manner as that of Example 1. The results are given in Tables 1 to 6.

Example 7

490 g of ammonium sulfate, 10 g of aluminum tristearate and one liter of ethanol were placed in a porcelain ball mill (capacity: 3 liters, ball: 1.5 liters), and pulverization was conducted at 60 r.p.m. for 4 hr. The resultant slurry was separated from the balls and filtered by using a G-4 glass filter under water-jet reduced pressure, and the solid matter was dried under reduced pressure. The resultant flame retardant powder was passed through a 200-mesh standard sieve (JIS) to remove coarse particles having a size of 75 $\mu$m or more (1.0 % or less). The mean particle diameter was 16 $\mu$m, and no caking was observed. This flame retardant was used according to formulations specified in Tables 2 to 6, and test pieces were molded therefrom in the same manner as that of Example 1. The results are given in Tables 1 to 6.

Comparative Example 1

A flame retardant powder was prepared in the same manner as that of Example 1, except that silicic anhydride was used instead of aluminum monocaproate. The resultant flame retardant powder had a maximum particle diameter of 48 $\mu$m and a mean particle diameter of 18 $\mu$m. However, this flame retardant powder immediately gave rise to caking. Test pieces were molded therefrom according to the formulations specified in Tables 2 to 6 in the same manner as that of Example 1. In this case, as opposed to the results of Example 1, the flame retardant gave rise to agglomeration, so that a molded article in which the flame retardant was homogeneously dispersed could not be obtained. Further, the molded articles were colored. The results are given in Tables 1 to 6.

Comparative Example 2

A flame retardant powder was prepared in the same manner as that of Example 6, except that silicic anhydride was used instead of aluminum tristearate. The resultant flame retardant powder was passed through a 200-mesh standard sieve (JIS) to remove coarse particles having a size of 75 $\mu$m or more (1.0 % or less). The mean particle diameter was 14 $\mu$m. In this case, however, caking immediately occurred. Test pieces were prepared according to the formulations specified in Tables 2 to 6 in the same manner as that of Example 6. In this case, as opposed to the results of Example 6, the flame retardant gave rise to agglomeration, so that a molded article in which the flame retardant was homogeneously dispersed could not be obtained. Further, the molded articles were colored. The results are given in Tables 1 to 6.

Comparative Example 3

A flame retardant powder was prepared in the same manner as that of Example 7, except that silicic anhydride was used instead of aluminum tristearate. The resultant flame retardant powder was passed through a 200-mesh standard sieve (JIS) to remove coarse particles having a size of 75 $\mu$m (1.0 % or less). The mean particle diameter was 14 $\mu$m. However, caking immediately occurred. Test pieces were molded therefrom according to the formulations specified in Tables 2 to 6 in the same manner as that of Example 7. In this case, as opposed to the results of Example 7, the flame retardant gave rise to agglomeration, so that a molded article in which the flame retardant was homogeneously dispersed could not be obtained. Further, the molded articles were colored. The results are given in Tables 1 to 6.

Comparative Example 4

A flame retardant powder was prepared in the same manner as that of Example 6, except that magnesium stearate was used instead of aluminum tristearate. In this case, when a lid of the porcelain ball mill was opened, a gas within the ball mill blew up. At the same time, there was a very strong odor of ammonia, and a pH test paper wetted with water showed that the gas evolved in the ball mill were basic, that is, there was ammonia gas. The resultant flame retardant powder was passed through a 200-mesh standard sieve (JIS) to remove coarse particles having a size of 75 $\mu$m or more (1.0 % or less). The mean particle diameter was 15 $\mu$m, and no caking was observed. This flame retardant was used according to the formulations specified in Tables 2 to 6, and test pieces were molded therefrom in the same manner as that of Example 6. As a result, although molded articles in which the flame retardant was homogeneously dispersed could be prepared, they were colored. The results are given in Tables 2 to 6.

Comparative Example 5

A flame retardant powder was prepared in the same manner as that of Example 6, except that sodium stearate was used instead of aluminum tristearate. In this case, when a lid of the porcelain ball mill was opened, a gas within the ball mill blew up. At the same time, there was a very strong odor of ammonia, and a pH test paper wetted with water showed that the gas evolved in the ball mill were basic, that is, there was ammonia gas. The resultant flame retardant powder was passed through a 200-mesh standard sieve (JIS) to remove coarse particles having a size of 75 $\mu$m or more (1.0 % or less). The mean particle diameter was 12 $\mu$m, and no caking was observed. This flame retardant was used according to the formulations specified in Tables 2 to 6, and test pieces were molded therefrom in the same manner as that of Example 6. As a result, although molded articles in which the flame retardant was homogeneously dispersed could be prepared, they were colored. The results are given in Tables 2 to 6.

EP 0 535 642 B1

Table 1

| | Ex. 1 | Ex. 2 | Ex. 3 | Ex. 4 | Ex. 5 | Ex. 6 | Ex. 7 | Comp. Ex.1 | Comp. Ex.2 | Comp. Ex.3 |
|---|---|---|---|---|---|---|---|---|---|---|
| Days taken for self-agglomeration to occur | 30 days or more | 30 days or more | 30 days or more | 30 days or more | 30 days or more | 30 days or more | 30 days or more | one day or less | one day or less | one day or less |

Table 2

| Flame retardant | | Resin | | Disper-sion | Color-ation of molded article | Water absorp-tion (%) | Combustion test | |
|---|---|---|---|---|---|---|---|---|
| Process | Amount of addition (wt.%) | Kind | Amount of addition (wt.%) | | | | UL-94 | LOI |
| Ex. 1 | 40 | PP*1 | 60 | good | no | −1.2 | V−0 | ——— |
| Ex. 2 | 40 | do. | 60 | good | no | −1.3 | V−0 | ——— |
| Ex. 3 | 40 | do. | 60 | good | no | −1.2 | V−0 | ——— |
| Ex. 4 | 40 | do. | 60 | good | no | −1.1 | V−0 | ——— |
| Ex. 5 | 40 | do. | 60 | good | no | −1.1 | V−0 | ——— |
| Ex. 6 | 40 | do. | 60 | good | no | −1.3 | V−0 | ——— |
| Ex. 7 | 40 | do. | 60 | good | no | −1.3 | V−0 | ——— |
| Comp. Ex.1 | 40 | do. | 60 | poor | yes | −5.0 | V−0 | ——— |
| Comp. Ex.2 | 40 | do. | 60 | poor | yes | −4.8 | V−0 | ——— |
| Comp. Ex.3 | 40 | do. | 60 | poor | yes | −5.3 | V−0 | ——— |
| Comp. Ex.4 | 40 | do. | 60 | good | yes | −3.8 | V−0 | ——— |
| Comp. Ex.5 | 40 | do. | 60 | good | yes | −4.0 | V−0 | ——— |
| Ex. 1 | 40 | LDPE*2 | 60 | good | no | ——— | ——— | 30.2 |
| Ex. 2 | 40 | do. | 60 | good | no | ——— | ——— | 30.3 |
| Ex. 3 | 40 | do. | 60 | good | no | ——— | ——— | 30.2 |
| Ex. 4 | 40 | do. | 60 | good | no | ——— | ——— | 31.0 |
| Ex. 5 | 40 | do. | 60 | good | no | ——— | ——— | 30.0 |
| Ex. 6 | 40 | do. | 60 | good | no | ——— | ——— | 30.0 |
| Ex. 7 | 40 | do. | 60 | good | no | ——— | ——— | 30.0 |
| Comp. Ex.1 | 40 | do. | 60 | poor | yes | ——— | ——— | 26.0 |
| Comp. Ex.2 | 40 | do. | 60 | poor | yes | ——— | ——— | 25.5 |
| Comp. Ex.3 | 40 | do. | 60 | poor | yes | ——— | ——— | 25.5 |
| Comp. Ex.4 | 40 | do. | 60 | good | yes | ——— | ——— | 26.2 |
| Comp. Ex.5 | 40 | do. | 60 | good | yes | ——— | ——— | 26.3 |

Table 3

| Flame retardant | | Resin | | Disper-sion | Color-ation of molded article | Water absorp-tion (%) | Combustion test | |
|---|---|---|---|---|---|---|---|---|
| Process | Amount of addition (wt.%) | Kind | Amount of addition (wt.%) | | | | UL-94 | LOI |
| Ex. 1 | 40 | HDPE*3 | 60 | good | no | —— | —— | 28.0 |
| Ex. 4 | 40 | do. | 60 | good | no | —— | —— | 29.0 |
| Ex. 5 | 40 | do. | 60 | good | no | —— | —— | 28.2 |
| Ex. 6 | 40 | do. | 60 | good | no | —— | —— | 28.0 |
| Ex. 7 | 40 | do. | 60 | good | no | —— | —— | 28.5 |
| Comp. Ex.1 | 40 | do. | 60 | poor | yes | —— | —— | 24.7 |
| Comp. Ex.2 | 40 | do. | 60 | poor | yes | —— | —— | 24.0 |
| Comp. Ex.3 | 40 | do. | 60 | poor | yes | —— | —— | 24.5 |
| Comp. Ex.4 | 40 | do. | 60 | good | yes | —— | —— | 24.8 |
| Comp. Ex.5 | 40 | do. | 60 | good | yes | —— | —— | 24.8 |
| Ex. 1 | 40 | PMMA*4 | 60 | good | no | −2.6 | V-0 | —— |
| Ex. 4 | 40 | do. | 60 | good | no | −2.4 | V-0 | —— |
| Ex. 5 | 40 | do. | 60 | good | no | −2.4 | V-0 | —— |
| Ex. 6 | 40 | do. | 60 | good | no | −2.4 | V-0 | —— |
| Ex. 7 | 40 | do. | 60 | good | no | −2.8 | V-0 | —— |
| Comp. Ex.1 | 40 | do. | 60 | poor | yes | −5.8 | V-0 | —— |
| Comp. Ex.2 | 40 | do. | 60 | poor | yes | −5.6 | V-0 | —— |
| Comp. Ex.3 | 40 | do. | 60 | poor | yes | −5.9 | V-0 | —— |
| Comp. Ex.4 | 40 | do. | 60 | good | yes | −4.5 | V-0 | —— |
| Comp. Ex.5 | 40 | do. | 60 | good | yes | −4.7 | V-0 | —— |

Table 4

| Flame retardant | | Resin | | Dispersion | Coloration of molded article | Water absorption (%) | Combustion test | |
|---|---|---|---|---|---|---|---|---|
| Process | Amount of addition (wt.%) | Kind | Amount of addition (wt.%) | | | | UL-94 | LOI |
| Ex. 1 | 40 | PS*5 | 60 | good | no | −3.1 | V−0 | —— |
| Ex. 4 | 40 | do. | 60 | good | no | −3.2 | V−0 | —— |
| Ex. 5 | 40 | do. | 60 | good | no | −3.3 | V−0 | —— |
| Ex. 6 | 40 | do. | 60 | good | no | −3.3 | V−0 | —— |
| Ex. 7 | 40 | do. | 60 | good | no | −3.0 | V−0 | —— |
| Comp. Ex.1 | 40 | do. | 60 | poor | yes | −5.5 | V−0 | —— |
| Comp. Ex.2 | 40 | do. | 60 | poor | yes | −5.0 | V−0 | —— |
| Comp. Ex.3 | 40 | do. | 60 | poor | yes | −4.9 | V−0 | —— |
| Comp. Ex.4 | 40 | do. | 60 | good | yes | −4.3 | V−0 | —— |
| Comp. Ex.5 | 40 | do. | 60 | good | yes | −4.4 | V−0 | —— |
| Ex. 1 | 40 | EVA*6 | 60 | good | no | —— | V−0 | —— |
| Ex. 4 | 40 | do. | 60 | good | no | —— | V−0 | —— |
| Ex. 5 | 40 | do. | 60 | good | no | —— | V−0 | —— |
| Ex. 6 | 40 | do. | 60 | good | no | —— | V−0 | —— |
| Ex. 7 | 40 | do. | 60 | good | no | —— | V−0 | —— |
| Comp. Ex.1 | 40 | do. | 60 | poor | yes | —— | V−0 | —— |
| Comp. Ex.2 | 40 | do. | 60 | poor | yes | —— | V−0 | —— |
| Comp. Ex.3 | 40 | do. | 60 | poor | yes | —— | V−0 | —— |
| Comp. Ex.4 | 40 | do. | 60 | good | yes | —— | V−0 | —— |
| Comp. Ex.5 | 40 | do. | 60 | good | yes | —— | V−0 | —— |

EP 0 535 642 B1

Table 5

| Flame retardant | | Resin | | Disper-sion | Color-ation of molded article | Water absorp-tion (%) | Combustion test | |
|---|---|---|---|---|---|---|---|---|
| Process | Amount of addition (wt.%) | Kind | Amount of addition (wt.%) | | | | UL-94 | LOI |
| Ex. 1 | 40 | EEA*7 | 60 | good | no | ——— | V-0 | ——— |
| Ex. 4 | 40 | do. | 60 | good | no | ——— | V-0 | ——— |
| Ex. 5 | 40 | do. | 60 | good | no | ——— | V-0 | ——— |
| Ex. 6 | 40 | do. | 60 | good | no | ——— | V-0 | ——— |
| Ex. 7 | 40 | do. | 60 | good | no | ——— | V-0 | ——— |
| Comp. Ex.1 | 40 | do. | 60 | poor | yes | ——— | V-0 | ——— |
| Comp. Ex.2 | 40 | do. | 60 | poor | yes | ——— | V-0 | ——— |
| Comp. Ex.3 | 40 | do. | 60 | poor | yes | ——— | V-0 | ——— |
| Comp. Ex.4 | 40 | do. | 60 | good | yes | ——— | V-0 | ——— |
| Comp. Ex.5 | 40 | do. | 60 | good | yes | ——— | V-0 | ——— |
| Ex. 1 | 40 | HIPS*8 | 60 | good | no | −2.0 | V-0 | ——— |
| Ex. 4 | 40 | do. | 60 | good | no | −2.2 | V-0 | ——— |
| Ex. 5 | 40 | do. | 60 | good | no | −1.9 | V-0 | ——— |
| Ex. 6 | 40 | do. | 60 | good | no | −2.1 | V-0 | ——— |
| Ex. 7 | 40 | do. | 60 | good | no | −2.2 | V-0 | ——— |
| Comp. Ex.1 | 40 | do. | 60 | poor | yes | −4.9 | V-0 | ——— |
| Comp. Ex.2 | 40 | do. | 60 | poor | yes | −4.6 | V-0 | ——— |
| Comp. Ex.3 | 40 | do. | 60 | poor | yes | −4.5 | V-0 | ——— |
| Comp. Ex.4 | 40 | do. | 60 | good | yes | −4.0 | V-0 | ——— |
| Comp. Ex.5 | 40 | do. | 60 | good | yes | −4.1 | V-0 | ——— |

Table 6

| Flame retardant | | Resin | | Disper-sion | Color-ation of molded article | Water absorp-tion (%) | Combustion test | |
|---|---|---|---|---|---|---|---|---|
| Process | Amount of addition (wt.%) | Kind | Amount of addition (wt.%) | | | | UL-94 | LOI |
| Ex. 1 | 40 | ABS*9 | 60 | good | no | −1.8 | V−0 | ——— |
| Ex. 4 | 40 | do. | 60 | good | no | −1.5 | V−0 | ——— |
| Ex. 5 | 40 | do. | 60 | good | no | −2.0 | V−0 | ——— |
| Ex. 6 | 40 | do. | 60 | good | no | −1.8 | V−0 | ——— |
| Ex. 7 | 40 | do. | 60 | good | no | −2.0 | V−0 | ——— |
| Comp. Ex.1 | 40 | do. | 60 | poor | yes | −4.2 | V−0 | ——— |
| Comp. Ex.2 | 40 | do. | 60 | poor | yes | −4.0 | V−0 | ——— |
| Comp. Ex 3 | 40 | do. | 60 | poor | yes | −4.5 | V−0 | ——— |
| Comp. Ex.4 | 40 | do. | 60 | good | yes | −3.5 | V−0 | ——— |
| Comp. Ex.5 | 40 | do. | 60 | good | yes | −3.7 | V−0 | ——— |

The symbols in the tables represent the following compounds.

*1: polypropylene (J450H manufactured by Idemitsu Petrochemical Co., Ltd., kneading temp.: 200 °C)

*2: low-density polyethylene (M420 manufactured by Mitsubishi Chemical Industries, Ltd., kneading temp.: 170 °C)

*3: high-density polyethylene (TVO 70H manufactured by Mitsubishi Chemical Industries, Ltd., kneading temp.: 180 °C)

*4: polymethyl methacrylate (Acrypet MD manufactured by Mitsubishi Rayon Co., Ltd., kneading temp: 200 °C)

*5: polystyrene (Stylon 666 manufactured by Asahi Chemical Industry Co., Ltd., kneading temp.: 200°C)

*6: ethylene-vinyl acetate copolymer (Evaflex P-2805 manufactured by Mitsui Polychemical Co., Ltd., kneading temp.: 180°C)

*7: ethylene-ethyl acrylate copolymer (WN-930 manufactured by Nippon Unicar Co., Ltd., kneading temp.: 200°C)

*8: high-impact polystyrene (Stylon 492 manufactured by Asahi Chemical Industry Co., Ltd., kneading temp.: 200°C)

*9: ABS resin (Kralastic K-3272M manufactured by Sumitomo Naugatuck Co., Ltd., kneading temp.: 200°C)

The present invention provides a flame retardant comprising ammonium sulfate as an effective component which is in a finely divided form and less liable to self-agglomeration, has high water resistance and is less liable to coloration at the time of kneading, which greatly contributes to the resin molding technique.

## Claims

1. A flame retardant consisting of a finely divided powder comprising ammonium sulfate and, 0.1 to 10.0 % by weight, based on the weight of ammonium sulfate, of at least one fatty acid salt of aluminum.

2. A flame retardant as set forth in claim 1, wherein the fatty acid salt of aluminum is selected from the group consisting of aluminum monocaproate, aluminum dicaproate, aluminum tricaproate, aluminum monocaprylate, aluminum dicaprylate, aluminum tricaprylate, aluminum monocaprate, aluminum dicaprate, aluminum tricaprate, aluminum monolaurate, aluminum dilaurate, aluminum trilaurate, aluminum monomyristate, aluminum dimyristate, aluminum trimyristate, aluminum monopalmitate, aluminum dipalmitate, aluminum tripalmitate, aluminum monostearate, aluminum distearate, aluminum tristearate, aluminum monooleate, aluminum dioleate, aluminum trioleate, aluminum monoarachidate, aluminum diarachidate, aluminum triarachidate, aluminum monobehenate, aluminum dibehenate and aluminum tribehenate.

3. A flame retardant as set forth in claim 1, where the amount of the fatty acid salt of aluminum is 0.3 to 5.0 % by weight.

4. A flame retardant as set forth in claim 1, wherein the finely divided powder has a maximum particle diameter of 75 μm or less.

5. A process for producing a flame retardant, comprising pulverizing ammonium sulfate in the presence of 0.1 to 10.0 % by weight, based on the weight of ammonium sulfate, of at least one fatty acid salt of aluminum.

6. A process according to claim 5, wherein the pulverization is conducted by means of a pulverizer and the surface of ammonium sulfate is treated with the fatty acid salt of aluminum at the time of pulverization.

## Patentansprüche

1. Flammschutzmittel, welches aus einem fein zerkleinerten Pulver besteht, welches umfaßt: Ammoniumsulfat und, bezogen auf das Gewicht des Ammoniumsulfats, 0,1 bis 10,0 Gew.-% mindestens eines Fettsäuresalzes des Aluminiums.

2. Flammschutzmittel nach Anspruch 1, bei dem das Fettsäuresalz des Aluminiums ausgewählt ist aus der Gruppe, die besteht aus: Aluminiummonocaproat, Aluminiumdicaproat, Aluminiumtricaproat, Aluminiummonocaprylat, Aluminiumdicaprylat, Aluminiumtricaprylat, Aluminiummonocaprat, Aluminiumdicaprat, Aluminiumtricaprat, Aluminiummonolaurat, Aluminiumdilaurat, Aluminiumtrilaurat, Aluminiummonomyristat, Aluminiumdimyriystat, Aluminiumtrimyristat, Aluminiummonopalmitat, Aluminiumdipalmitat, Aluminiumtripalmitat, Aluminiummonostearat, Aluminiumdistearat, Aluminiumtristearat, Aluminiummonooleat, Aluminiumdioleat, Aluminiumtrioleat, Aluminiummonoarachidat, Aluminiumdiarachidat, Aluminiumtriarachidat, Aluminimmonobehenat, Aluminiumdibehenat und Aluminiumtribehenat.

**3.** Flammschutzmittel nach Anspruch 1, bei dem die Menge des Fettsäuresalzes des Aluminiums 0,3 bis 5,0 Gew.-% beträgt.

**4.** Flammschutzmittel nach Anspruch 1, bei dem das fein zerkleinerte Pulver einen maximalen Partikeldurchmesser von 75 $\mu$m oder weniger aufweist.

**5.** Verfahren zum Herstellen eines Flammschutzmittels, welches das Pulverisieren von Ammoniumsulfat in Anwesenheit von, bezogen auf das Gewicht des Ammoniumsulfats, 0,1 bis 10,0 Gew.-% mindestens eines Fettsäuresalzes des Aluminiums umfaßt.

**6.** Verfahren nach Anspruch 5, bei dem das Pulverisieren mit Hilfe einer Pulverisiervorrichtung durchgeführt wird und bei dem die Oberfläche des Ammoniumsulfats zum Zeitpunkt der Pulverisierung mit dem Fettsäuresalz des Aluminiums behandelt wird.

**Revendications**

**1.** Retardateur de flamme composé d'une poudre finement divisée comprenant du sulfate d'ammonium et de 0,1 à 10,0% en poids, sur base du poids du sulfate d'ammonium, d'au moins un sel d'acide gras d'aluminium.

**2.** Retardateur de flamme suivant la revendication 1, dans lequel le sel d'acide gras d'aluminium est choisi parmi le groupe composé de monocaproate d'aluminium, le dicaproate d'aluminium, le tricaproate d'aluminium, le monocaprylate d'aluminium, le dicaprylate d'aluminium, le tricaprylate d'aluminium, le monocaprate d'aluminium, le dicaprate d'aluminium, le tricaprate d'aluminium, le monolaurate d'aluminium, le dilaurate d'aluminium, le trilaurate d'aluminium, le monomyristate d'aluminium, le dimyristate d'aluminium, le trimyristate d'aluminium, le monopalmitate d'aluminium, le dipalmitate d'aluminium, le tripalmitate d'aluminium, le monostéarate d'aluminium, le distéarate d'aluminium, le tristéarate d'aluminium, le mono-oléate d'aluminium, le dioléate d'aluminium, le trioléate d'aluminium, le mono-arachidate d'aluminium, le diarachidate d'aluminium, le triarachidate d'aluminium, le monobéhénate d'aluminium, le dibéhénate d'aluminium et le tribéhénate d'aluminium.

**3.** Retardateur de flamme suivant la revendication 1, dans lequel la quantité de sel d'acide gras d'aluminium est de 0,3 à 5,0% en poids.

**4.** Retardateur de flamme suivant la revendication 1, dans lequel la poudre finement divisée a un diamètre de particule maximal de 75 $\mu$m ou moins.

**5.** Procédé pour la production d'un retardateur de flamme, comprenant la pulvérisation du sulfate d'ammonium en présence de 0,1 à 10,0% en poids, sur base du poids du sulfate d'ammonium, d'au moins un sel d'acide gras d'aluminium.

**6.** Procédé suivant la revendication 5, dans lequel la pulvérisation est réalisée à l'aide d'un pulvérisateur et la surface du sulfate d'ammonium est traitée par le sel d'acide gras d'aluminium au moment de la pulvérisation.